# EUROPEAN PATENT APPLICATION

(11) **EP 4 628 757 A1**
(43) Date of publication of application: **08.10.2025**
(21) Application number: 23895990.2
(22) Date of filing: 29.06.2023
(51) Int. Cl.: F16H 55/17

(54) **GEAR, ELECTRIC DRIVE ASSEMBLY AND VEHICLE**

(30) Priority: 30.11.2022 CN 202211523845
(71) Applicant: BYD Company Limited, Shenzhen, Guangdong 518118 (CN)
(72) Inventor: GUO, Yang, Shenzhen, Guangdong 518118 (CN); ZHAO, Tonghang, Shenzhen, Guangdong 518118 (CN); PENG, Jie, Shenzhen, Guangdong 518118 (CN); TIAN, Shudong, Shenzhen, Guangdong 518118 (CN); CHEN, Xiangzhen, Shenzhen, Guangdong 518118 (CN)
(74) Representative: Mathys & Squire
(86) International application number: PCT/CN2023/103557
(87) International publication number: WO 2024/113826

(57) **Abstract**

A vehicle, comprising a gear (100) or an electric drive assembly (1). The gear (100) comprises: a rim (110), a central part (120) and spokes. A peripheral wall of the rim (110) is provided with meshing teeth (111) arranged along a circumferential direction thereof, the central part (120) is located on a radial inner side of the rim (110), and the spokes are connected between the rim (110) and the central part (120). The spokes comprise a plurality of first webs and a plurality of second webs spaced apart along the circumferential direction of the rim (110). Along a width direction of the gear (100), the first webs and the second webs are located on two sides of a central line of the rim (110) respectively.

## Description

### CROSS-REFERENCE TO RELATED APPLICATIONS

The present disclosure claims priority to Chinese Patent Application No. 202211523845.X, filed on November 30, 2022 and entitled "GEAR, SPEED REDUCER, ELECTRIC DRIVE ASSEMBLY, AND VEHICLE". The entire content of the above-referenced application is incorporated herein by reference.

### FIELD

The present disclosure relates to the field of gears, and in particular, to a gear, an electric drive assembly, and a vehicle.

### BACKGROUND

In the related art, NVH performance of new energy vehicles is an important part of product competitiveness. The NVH performance refers to Noise, Vibration, and Harsh. However, electric drive systems of new energy vehicles are prone to NVH problems such as howling and beat frequency. In the related art, most solutions for improving the NVH performance of new energy vehicles have deficiencies. A speed reducer has an input gear and an output gear. Since a spoke of a conventional gear is located at a middle position of a rim tooth width as a whole, a support effect on meshing teeth is poor during meshing of the gear, and a mesh misalignment amount of the gear is large, which extremely easily causes beat frequency phenomena of the gear due to a speed difference of the mechanism.

### SUMMARY

The present disclosure is intended to resolve at least one of the technical problems existing in the related art. An object of the present disclosure is to provide a gear. A spoke of the gear designed based on the present disclosure supports a rim in a distributed manner in a width direction of the rim, which can better maintain a mesh degree of a gear, and may reduce a mesh misalignment amount of the gear, so that meshing of the gear is smoother, thereby reducing transmission error excitation during the meshing of the gear.

The present disclosure further provides an electric drive assembly having the foregoing gear.

The present disclosure further provides a vehicle having the foregoing electric drive assembly.

The gear according to the present disclosure includes a rim, a central portion, and a spoke. An outer peripheral wall of the rim is provided with meshing teeth arranged along a circumferential direction thereof. The central portion is located on a radial inner side of the rim. The spoke is connected between the rim and the central portion. The spoke includes a plurality of first web plates and a plurality of second web plates spaced apart along the circumferential direction of the rim. In a width direction of the gear, the first web plates and the second web plates are respectively located on two sides of a center line of the rim.

In the gear according to the present disclosure, the spoke is designed to have the first web plates and the second web plates distributed on both sides in the width direction of the gear, so that the spoke can support the rim in a distributed manner in the width direction of the rim, to increase a supporting area of the spoke for the rim, maintain a mesh degree of the meshing teeth on the rim, and reduce a mesh misalignment amount of the gear. In this way, the meshing of the gear is smoother, thereby ensuring that the gear can operate based on a theoretical meshing trajectory, and reducing transmission error excitation during the meshing of the gear.

According to some embodiments of the present disclosure, a quantity and weights of the first web plates are equal to those of the second web plates.

According to some embodiments of the present disclosure, in an axial direction of the gear, a spacing between the first web plate and the center line of the rim is a first spacing, a spacing between the second web plate and the center line of the rim is a second spacing, and the first spacing is the same as the second spacing.

According to some embodiments of the present disclosure, in a circumferential direction of the gear, the first web plate and the second web plate that are adjacent to each other are connected by a common first side wall. The first side wall is transitionally connected to a first bottom wall of a corresponding first web plate through a first transitional surface, and the first side wall is transitionally connected to a second bottom wall of a corresponding second web plate through a second transitional surface.

According to some embodiments of the present disclosure, the first bottom wall of at least one of the first web plates and/or the second bottom wall of at least one of the second web plates is provided with a weight-saving hole.

According to some embodiments of the present disclosure, in the axial direction of the gear, a width of the rim is L1, a wall thickness of the first web plate and/or the second web plate is L2, and L1 and L2 satisfy the following relationship: L2/L1 ≤ 1/3.

According to some embodiments of the present disclosure, a ratio of a wall thickness of the first web plate and/or the second web plate to a thickness of the rim satisfies L2/L1 ≥ 1/6.

According to some embodiments of the present disclosure, in the axial direction of the gear, the width of the rim is L1, a width of the spoke is L3, and a value of L3/L1 ranges from 80% to 95%.

An electric drive assembly according to another embodiment of the present disclosure is briefly described below.

The electric drive assembly according to the present disclosure includes a speed reducer and a drive motor. The speed reducer is provided with a gear set. The gear set includes an input gear and an output gear. The drive motor is connected to the input gear, and the output gear is the gear in any of the foregoing embodiments. Since the electric drive assembly according to the present disclosure is provided with the speed reducer of the foregoing embodiments, meshing of the gear of the electric drive assembly is smoother, and beat frequency phenomena may be effectively controlled.

According to some embodiments of the present disclosure, the speed reducer is provided with two sets of gear sets. The drive motor includes a first drive motor and a second drive motor. The first drive motor and the second drive motor are respectively connected to the input gear of the two sets of gear sets.

A vehicle according to another embodiment of the present disclosure is briefly described below.

The vehicle according to the present disclosure includes the gear in any of the foregoing embodiments, or includes the electric drive assembly in any of the foregoing embodiments. Since the vehicle according to the present disclosure is provided with the gear or the electric drive assembly of the foregoing embodiments, the vehicle is not prone to NVH problems such as howling and beat frequency.

Based on the above, the gear according to the present disclosure is designed to have a new type of spoke to reduce a mesh misalignment amount of the gear. The spoke has the first web plate distributed on one side of a center line of the rim and the second web plate distributed on the other side of the center line of the rim, so that the spoke can play a distributed supporting role in a tooth width direction of the rim of the gear. A supporting area of the spoke for the rim is increased to maintain a mesh degree of the meshing teeth on the rim, thereby reducing the mesh misalignment amount of the gear. In addition, the spoke designed according to the present disclosure reduce stress concentration to achieve high strength of the spoke. The spoke provides a more uniform support force for the rim, to maintain the mesh degree of the meshing teeth on the rim during the meshing of the gear, and reduce the mesh misalignment amount of the gear. In this way, the meshing of the gear is smoother, thereby ensuring that the gear can operate based on a theoretical meshing trajectory, reducing transmission error excitation during the meshing of the gear, and suppressing occurrence of the beat frequency phenomena of the gear.

Additional aspects and advantages of the present disclosure are to be partially given in the following description, and partially become apparent in the following description or learned through the practice of the present disclosure.

### BRIEF DESCRIPTION OF THE DRAWINGS

The foregoing and/or additional aspects and advantages of the present disclosure are to become apparent and easy to understand in the description of the embodiments made with reference to the following accompanying drawings.
FIG. 1 is a schematic diagram of an electric drive assembly according to an embodiment of the present disclosure.
FIG. 2 is a schematic structural diagram of a gear according to an embodiment of the present disclosure.
FIG. 3 is a front view of a gear according to an embodiment of the present disclosure.
FIG. 4 is a partial cross-sectional view of a gear according to an embodiment of the present disclosure.
FIG. 5 is a right view of a gear according to an embodiment of the present disclosure.
FIG. 6 is a left view of a gear according to an embodiment of the present disclosure.
FIG. 7 is a schematic structural diagram of a gear according to another embodiment of the present disclosure.
FIG. 8 is a comparison diagram of calculation results of misalignment quantities at different location points between a conventional spoke and a special-shaped spoke designed according to the present disclosure.
FIG. 9 is a schematic diagram of a tooth surface contact situation with a small misalignment amount.
FIG. 10 is a schematic diagram of a tooth surface contact situation with a large misalignment amount.
FIG. 11 is a comparison diagram of transmission errors between a conventional spoke and a special-shaped spoke designed according to the present disclosure.

In the drawings:
Electric drive assembly 1;
Speed reducer 10; Gear 100; Rim 110; Meshing teeth 111; Central portion 120; First bottom wall 131; Second bottom wall 132; First side wall 133; Weight-saving hole 134; First drive motor 20; Second drive motor 30; and Integrated electronic control 40.

### DETAILED DESCRIPTION

Embodiments of the present disclosure are described in detail below, and examples of the embodiments are shown in drawings. Same or similar elements or elements having same or similar functions are represented by same or similar reference numerals throughout the description. The embodiments described below with reference to the accompany drawings are exemplary and used only for explaining the present disclosure, and cannot be construed as a limitation on the present disclosure.

In the description of the present disclosure, it should be understood that orientation or position relationships indicated by the terms such as "center", "longitudinal", "transverse", "length", "width", "thickness", "on", "below", "front", "back", "left", "right", "vertical", "horizontal", "top", "bottom", "inside", "outside", "clockwise", and "anticlockwise" are based on orientation or position relationships shown in the accompanying drawings, and are used only for ease and brevity of description of the present disclosure, rather than indicating or implying that the mentioned apparatus or element needs to have a particular orientation or be constructed and operated in a particular orientation. Therefore, such terms should not be construed as a limitation on the present disclosure.

In addition, the terms "first" and "second" are merely used for the purpose of description, and cannot be construed as indicating or implying relative importance or implicitly indicating a quantity of the indicated technical features. Therefore, features limited by "first" and "second" may explicitly or implicitly include one or more of the features. In description of the present disclosure, "a plurality of" means at least two, such as two and three unless otherwise explicitly and specifically defined.

In the present disclosure, unless otherwise explicitly specified and defined, terms such as "mount", "connect", "connection", and "fix" should be understood in a broad sense. For example, the connection may be a fixed connection, a detachable connection, or an integral connection; or may be a mechanical connection, an electrical connection, or mutual communication; or may be a direct connection, an indirect connection through an intermediate medium, internal communication between two elements, or an interaction relationship between two elements. A person of ordinary skill in the art may understand the specific meanings of the foregoing terms in the present disclosure according to specific situations.

In the present disclosure, unless otherwise explicitly specified and defined, a first feature being "over" or "below" a second feature may include that the first feature and the second feature are in direct contact, or may include that the first feature and the second feature are not in direct contact but are in contact through another feature therebetween. In addition, that the first feature is "above", "over", or "on" the second feature includes that the first feature is directly or obliquely above the second feature, or merely means that the first feature is at a higher horizontal position than the second feature. The first feature being "below", "under", or "beneath" the second feature includes that the first feature is directly or obliquely below the second feature, or merely means that the first feature is at a lower horizontal position than the second feature.

In the related art, NVH performance of new energy vehicles is an important part of product competitiveness. The NVH performance refers to noise, vibration, and harsh. However, electric drive systems of new energy vehicles are prone to NVH problems such as howling and beat frequency. In the related art, most solutions to improving the NVH performance of new energy vehicles have deficiencies. A speed reducer has an input gear and an output gear. Since a spoke of a conventional gear is located at a middle position of a rim tooth width as a whole, a support effect on meshing teeth is poor during meshing of the gear, and a mesh misalignment amount of the gear is large, which extremely easily causes beat frequency phenomena of the gear due to a speed difference in terms of mechanism.

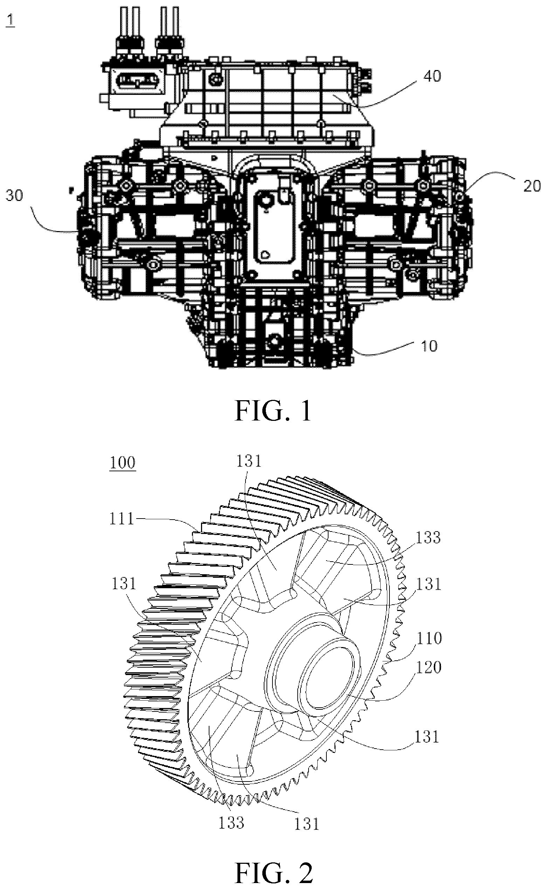

A gear 100 according to the embodiments of the present disclosure is described below with reference to FIG. 2 to FIG. 11.

As shown in FIG. 2, the gear 100 according to the present disclosure includes a rim 110, a central portion 120, and a spoke. An outer peripheral wall of the rim 110 is provided with meshing teeth 111 arranged along a circumferential direction thereof. The central portion 120 is located on a radial inner side of the rim 110. The spoke is connected between the rim 110 and the central portion 120. The spoke includes a plurality of first web plates and a plurality of second web plates spaced apart along the circumferential direction of the rim 110. In a width direction of the gear 100, the first web plates and the second web plates are respectively located on two sides of a center line of the rim 110. Specifically, the rim 110 is annular in construction, and the meshing teeth 111 arranged along the circumferential direction of the rim 110 are formed on the outer peripheral wall. The central portion 120 of the gear 100 is connected to the spoke. The spoke connects the central portion 120 to the rim 110. The spoke has a plurality of first web plates and a plurality of second web plates spaced apart along the circumferential direction of the rim 110. The gear 100 has a center line in the width direction. The first web plates and the second web plates are respectively located on two sides of the center line. A width direction of the rim 110 is the same as the width direction of the gear 100, so that the spoke can support the rim 110 on two sides in the width direction of the rim 110. In other words, the first web plates and the second web plates of the spoke support the rim 110 in a distributed manner in the width direction of the rim 110, to increase a supporting area of the spoke for the rim 110. During meshing of two gears 100, the first web plates and the second web plates of the spoke support the rim 110 to cause a contact area of two meshing teeth 111 that are meshed with each other to be closer to the center of a tooth surface, which can better maintain a mesh degree of the gear 100, and may reduce a mesh misalignment amount of the gear 100. In this way, the meshing of the gear 100 is smoother, thereby reducing transmission error excitation during the meshing of the gear 100.

In the gear 100 according to the present disclosure, the spoke is designed to have the first web plates and the second web plates distributed on both sides in the width direction of the gear 100, so that the spoke can support the rim 110 in a distributed manner in the width direction of the rim 110, to increase a supporting area of the spoke for the rim 110, maintain a mesh degree of the meshing teeth 111 on the rim 110, and reduce a mesh misalignment amount of the gear 100. In this way, the meshing of the gear 100 is smoother, thereby ensuring that the gear 100 can operate based on a theoretical mesh trajectory, and reducing transmission error excitation during the meshing of the gear 100.

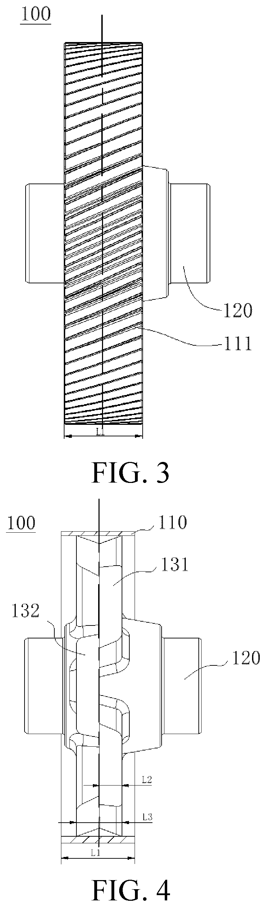

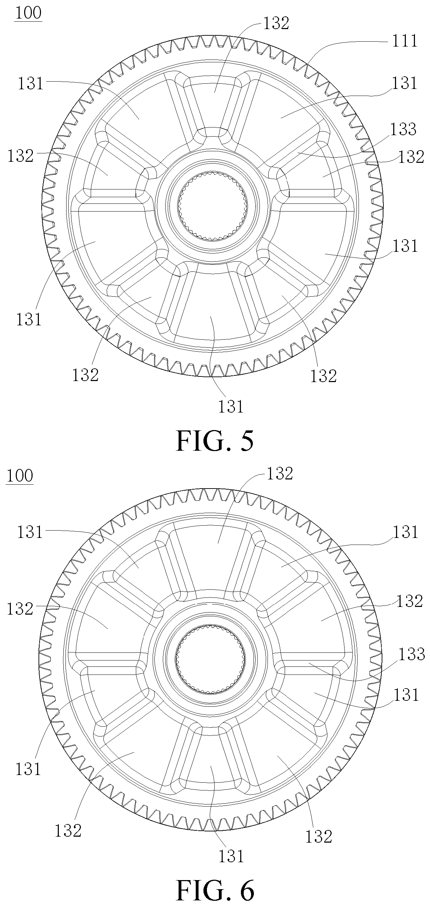

According to some embodiments of the present disclosure, as shown in FIG. 5 to FIG. 7, a quantity and weights of the first web plates are equal to those of the second web plates. Specifically, the quantities and weights of the first web plates and the second web plates that constitute the spoke are equal. The spoke is constructed to be evenly divided into multiple parts by the first web plate and the second web plate. The spoke of the gear 100 comprises a plurality of first web plates and a plurality of second web plates. The first web plates of multiple spokes are distributed on one side of a center line of the rim 110, and the second web plates of the multiple spokes are distributed on the other side of the center line of the rim 110. One first web plate and one second web plate form a set of supports. Multiple sets of supports are arranged in sequence in a circumferential direction of the gear 100, so that the second web plate is connected between every two first web plates, and the first web plate is connected between every two second web plates, to apply a uniform support force to the rim 110 of the gear 100 in the width direction, maintain the mesh degree of the meshing teeth 111 on the rim 110 during meshing of the gear 100, and reduce the mesh misalignment amount of the gear 100. In this way, the meshing of the gear 100 is smoother. In some embodiments, as shown in FIG. 4 to FIG. 6, the spoke may comprise multiple sets of supports. When the spoke has too many first web plates and second web plates, the weight is large, and processing is not convenient, and when the spoke has too few first web plates and second web plates, the spoke has a poor supporting effect on the rim 110. Therefore, preferably, the spoke comprises five sets of supports. In this case, each set of supports spans an angle of 72° in the circumferential direction of the gear 100, and the entire spoke is divided into ten parts by the first web plates and the second web plates.

It may be understood that the plurality of first web plates and the plurality of second web plates have the same structure. The first web plates and the second web plates that have the same structure have the same support force for the rim 110, so that the spoke has the same supporting effect on two sides of the rim 110, thereby avoiding mesh misalignment of the gear 100 which occurs when it is meshed as a result of poor supporting on a side. The spoke connects the rim 110 and the central portion 120 to support the rim 110. In an axial projection of the gear 100 of some embodiments, a projection of the spoke is circular. The plurality of first web plates and the plurality of second web plates divide the spoke into multiple annular sectors. To balance the support force on the rim 110, the first web plates and the second web plates having the same structure are distributed in the circumferential direction of the gear 100, and each first web plate and each second web plate are both an annular sector. The annular sectors have the same structure, to achieve the same supporting effect of the first web plates and the second web plates on two sides of the rim 110, maintain the mesh degree of the meshing teeth 111 on the rim 110 during meshing of the gear 100, and reduce the mesh misalignment amount of the gear 100, so that the meshing of the gear 100 is smoother.

According to some embodiments of the present disclosure, as shown in FIG. 2 and FIG. 3, in an axial direction of the gear 100, a spacing between the first web plate and the center line of the rim 110 is a first spacing, a spacing between the second web plate and the center line of the rim 110 is a second spacing, and the first spacing is the same as the second spacing. Specifically, the spoke of the gear 100 comprises a plurality of first web plates distributed on one side of the center line of the rim 110 and a plurality of second web plates distributed on the other side of the center line of the rim 110. A first spacing is formed between the first web plate and the center line of the rim 110, a second spacing is formed between the second web plate and the center line of the rim 110, and the first spacing is the same as the second spacing, so that the first web plates and the second web plates may be uniformly distributed in the width direction of the rim 110. In this way, the spoke has the same supporting effect in the width direction of the rim 110, to avoid mesh misalignment of the gear 100 which occurs when it is meshed as a result of poor supporting, cause first web plate the rim 110 of the gear 100 to receive a uniform support force, maintain the mesh degree of the meshing teeth 111 on the rim 110 during the meshing of the gear 100, and reduce the mesh misalignment amount of the gear 100, so that the meshing of the gear 100 is smoother.

According to some embodiments of the present disclosure, as shown in FIG. 5 to FIG. 7, in a circumferential direction of the gear 100, the first web plate and the second web plate that are adjacent to each other are connected by a common first side wall 133. The first side wall 133 is transitionally connected to a first bottom wall 131 of a corresponding first web plate through a first transitional surface, and the first side wall 133 is transitionally connected to a second bottom wall 132 of a corresponding second web plate through a second transitional surface. Specifically, the first web plate and the second web plate that are adjacent to each other are connected through the first side wall 133. For ease of processing, the first side wall 133 is connected to each of the bottom wall of the first web plate and the bottom wall of the second web plate that are adjacent to each other through a transitional surface. The transitional surfaces are respectively the first transitional surface and the second transitional surface, and the transitional surfaces may be in inclined surface transition or arc transition, to reduce stress concentration and improve spoke strength. More specifically, the first web plate comprises the first bottom wall 131 and the first side wall 133, and the second web plate comprises the second bottom wall 132 and the first side wall 133. The first bottom wall 131 is located on one side of the center line of the rim 110. The first bottom wall 131 connects an inner peripheral wall of the rim 110 to the central portion 120. The second bottom wall 132 is located on the other side of the center line of the rim 110. The second bottom wall 132 connects the inner peripheral wall of the rim 110 to the central portion 120. The first side wall 133 is arranged on a side edge of the first bottom wall 131. The first side wall 133 extends toward an adjacent second bottom wall 132. The first side wall 133 is transitionally connected to the first bottom wall 131 through the first transitional surface, and the first side wall 133 is transitionally connected to the second bottom wall 132 through the second transitional surface. In this case, the first side wall 133 may be inclined in the axial direction of the gear 100 and form an inclined side wall.

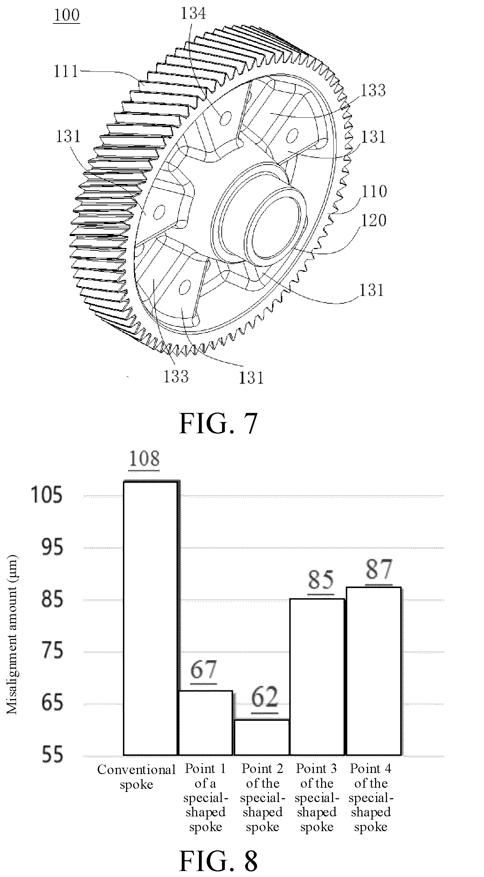

According to some embodiments of the present disclosure, as shown in FIG. 7, the first bottom wall 131 of at least one first web plate and/or the second bottom wall 132 of at least one second web plate is provided with a weight-saving hole 134. The weight-saving hole 134 may reduce a weight of the spoke, thereby reducing an overall weight of the gear 100. In some embodiments, multiple weight-saving holes 134 may be constructed and are respectively located on the first bottom wall 131 and/or the second bottom wall 132, so that the weight of the spoke may be reduced without affecting support strength of the spoke for the rim 110.

According to some embodiments of the present disclosure, as shown in FIG. 3 to FIG. 7, in the axial direction of the gear 100, a width of the rim 110 is L1, a wall thickness of the first web plate and/or the second web plate is L2, and L1 and L2 satisfy the following relationship: L2/L1 ≤ 1/3. Specifically, to reduce the weight of the gear 100, a wall thickness of the spoke needs to be properly reduced. Therefore, a ratio of the wall thickness of the first web plate and/or the second web plate to the width of the rim 110 needs to satisfy L2/L1 ≤ 1/3, to reduce the weight of the gear 100. The ratio of L2 to L1 includes, but is not limited to, 1/6, 1/4, or the like.

According to some embodiments of the present disclosure, as shown in FIG. 3 to FIG. 7, a ratio of the wall thickness of the first web plate and/or the second web plate to a thickness of the rim 110 satisfies L2/L1 ≥ 1/6. Specifically, to ensure the supporting effect of the spoke on the rim 110, the wall thickness of the spoke should not be excessively small. Therefore, the ratio of the wall thickness of the first web plate and/or the second web plate to the width of the rim 110 should satisfy 1/6 ≤ L2/L1. In some embodiments, to ensure the supporting effect of the spoke on the rim 110 while reducing the weight of the gear 100, the ratio of a wall thickness L2 of the first web plate and/or the second web plate to the width L1 of the rim 110 satisfies 1/6 ≤ L2/L1 ≤ 1/3, and the ratio of L2 to L1 includes, but is not limited to, 1/6, 1/4, or the like.

According to some embodiments of the present disclosure, as shown in FIG. 3 to FIG. 7, in the axial direction of the gear 100, the width of the rim 110 is L1, a width of the spoke is L3, and a value of L3/L1 ranges from 80% to 95%. Specifically, since the gear 100 has a relatively large axial force when transmitting a relatively large torque, in a case that a structure of the gear 100 is subjected to a certain force, deformation of the gear 100 is negatively correlated with stiffness thereof. The spoke of the gear 100 of the present disclosure provides support in a width direction of the entire rim 110 to enhance bending stiffness of the gear 100 in the axial direction. The first web plates and the second web plates of the spoke support the gear 100 in the axial direction of the gear 100. In some embodiments, the width of the spoke in the axial direction of the gear 100 is a spacing between a plane where the first bottom wall 131 of the first web plate is located and a plane where the second bottom wall 132 of the second web plate is located. To avoid problems such as a heavy weight and mounting difficulty as a result of an excessively large overall width of the spoke, the width L3 of the spoke should not be greater than the width L1 of the rim 110. In addition, to ensure a supporting effect of the spoke on the rim 110, the width of the spoke should not be excessively small. Therefore, a value of the ratio L3/L1 of the width of the spoke to the width of the rim 110 ranges from 80% to 95%.

In some embodiments of the present disclosure, the gear 100 includes a rim 110, a spoke, and a central portion 120. The rim 110 is a carrier of the meshing teeth 111. The meshing teeth 111 are located on the rim 110. The rim 110 is connected to the central portion 120 through the spoke. An inner side of the central portion 120 is mainly a spline structure or a shaft structure to connect to a component such as a bearing. Power may be transmitted to an output end through the meshing teeth 111, the rim 110, the spoke, and finally through the central portion 120. The spoke includes a plurality of first web plates distributed on one side of the center line of the rim 110 and a plurality of second web plates distributed on the other side of the center line of the rim 110. The plurality of first web plates and the plurality of second web plates have the same structure. One first web plate and one second web plate form a set of supports. Multiple sets of supports are arranged in sequence in a circumferential direction of the gear 100. The plurality of first web plates and the plurality of second web plates play a supporting role on two sides of the rim 110, and the weight-saving hole 134 is formed on the plurality of first web plates and the plurality of second web plates.

During meshing of two gears 100, the first web plate and the second web plate of the spoke provide a more uniform support force to the rim 110, and the spoke can support the rim 110 in the width direction of the rim 110, so that a contact area of two meshing teeth 111 that are meshed with each other is closer to the center of a tooth surface, which can better maintain a mesh degree of the gear 100, and may reduce a mesh misalignment amount of the gear 100. In this way, the meshing of the gear 100 is smoother, thereby reducing transmission error excitation during the meshing of the gear 100.

A speed reducer 10 according to the present disclosure is briefly described below.

The speed reducer 10 according to the present disclosure includes the gear 100 in any of the foregoing embodiments. Since the speed reducer 10 according to the present disclosure is provided with the gear 100 of the foregoing embodiment, the speed reducer 10 has a small power transmission error and a good transmission effect, and operates more stably.

An electric drive assembly 1 according to another embodiment of the present disclosure is briefly described below.

As shown in FIG. 1, the electric drive assembly 1 according to the present disclosure includes a speed reducer 10 and a drive motor. The speed reducer 10 is provided with a gear set. The gear set includes an input gear 100 and an output gear 100. The drive motor is connected to the input gear 100. The output gear 100 is the gear 100 in any of the foregoing embodiments. Specifically, the drive motor is connected to the input gear 100 of the gear set. Power may be transmitted to an output end through meshing teeth 111, a rim 110, a spoke, and finally a central portion 120 of the gear 100. Since the electric drive assembly 1 according to the present disclosure is provided with the speed reducer 10 of the foregoing embodiments, meshing of the gear of the electric drive assembly 1 is smoother, and beat frequency phenomena may be effectively controlled.

According to some embodiments of the present disclosure, as shown in FIG. 1, the speed reducer 10 is provided with two sets of gear sets. The drive motor includes a first drive motor 20 and a second drive motor 30. The first drive motor 20 and the second drive motor 30 are respectively connected to the input gears of the two sets of gear sets. Specifically, the electric drive assembly 1 includes two motors, two sets of gear sets, and an integrated electronic control 40. The first drive motor 20 and the second drive motor 30 are respectively connected to the input gear 100 of the two sets of gear sets. Power may be transmitted to an output end through the meshing teeth 111, the rim 110, the spoke, and finally the central portion 120 of the gear 100, so that the meshing of the gear 100 is smoother, and occurrence of beat frequency phenomena may be avoided.

Since the gear 100 has a relatively large axial force when transmitting a relatively large torque, it may be learned from Equation F = KX that in a case that the gear 100 is subjected to a certain force, deformation of the gear 100 is negatively correlated with stiffness. Compared with the conventional gear spoke with web plates distributed in the center of a tooth width, the first web plates and the second web plates of the spoke of the gear 100 of the present disclosure are distributed in the tooth width direction of the entire meshing teeth 111, so that axial bending stiffness of the special-shaped spoke of the present disclosure is significantly higher than that of the conventional spoke. Effect verification is performed on the conventional spoke and the special-shaped spoke through finite element software. Four points are taken at extreme positions of a support structure of the special-shaped spoke. Point 1 is a middle position of the first web plate, Point 2 is a position where the first web plate and the second web plate are connected, Point 3 is a middle position of the second web plate, and Point 4 is a position where the second web plate and the first web plate are connected. Simulation verification is performed on the four points to obtain a mesh misalignment amount of the gear. Under the same condition, a mesh misalignment amount of the gear corresponding to the conventional spoke is calculated. Through comparison, as shown in FIG. 8, it may be seen that an improvement effect of the misalignment amount of the special-shaped spoke relative to the conventional spoke may be in a range of 19.4% to 42.6%, and the improvement effect is significant.

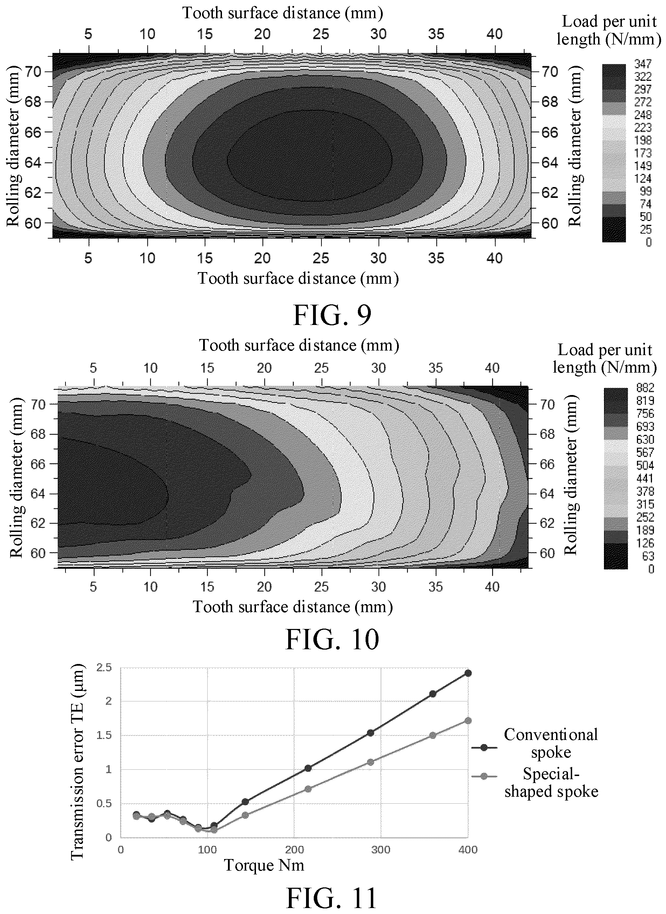

The special-shaped spoke of the present disclosure may reduce transmission errors of the gear 100. Due to relatively high axial stiffness of the special-shaped spoke, the mesh misalignment amount of the gear may be effectively reduced through calculation and verification. However, a reduced mesh misalignment amount indicates a lower risk that the meshing teeth 111 are contacted on one side after a gear system is loaded. FIG. 9 and FIG. 10 show contact situations of tooth surfaces with different misalignment quantities. Within a full-torque operating condition range, a smaller misalignment amount variation range causes the meshing teeth 111 to contact and be closer to the center of the tooth surface more easily, and a difference between an actual meshing position and a theoretical meshing position of the gear 100 is smaller. In other words, transmission errors of the gear 100 are lower, and a dynamic meshing force generated by the meshing of the gear 100 is smaller. Under the same parameter boundary, the comparison of the transmission errors of the conventional spoke and the special-shaped spoke is shown in FIG. 11. It may be seen that under medium and large torque operating conditions above 100 Nm, the transmission error of the special-shaped spoke is significantly less than that of the conventional spoke, and an optimized amplitude of the transmission error may reach 28.9%. Moreover, a smaller transmission error corresponds to a smaller fluctuation of the gear meshing force, which plays a crucial role in reducing beat frequency of the gear. The special-shaped spoke may cover a change of the entire torque band and adapt to the torque variation range. The special-shaped spoke of the present disclosure is configured for the electric drive assembly 1 having dual motors, and can effectively suppress the beat frequency phenomena generated by dual electric drive systems.

A vehicle according to another embodiment of the present disclosure is briefly described below.

The vehicle according to the present disclosure includes the gear 100 in any of the foregoing embodiments, or includes the speed reducer 10 in the foregoing embodiments, or includes the electric drive assembly 1 in any of the foregoing embodiments. Since the vehicle according to the present disclosure is provided with the gear 100, the speed reducer 10, or the electric drive assembly 1 of the foregoing embodiments, the vehicle is not prone to NVH problems such as howling and beat frequency.

Based on the above, the gear 100 according to the present disclosure is designed to have a new type of spoke to reduce mesh misalignment amounts of the gear 100. The spoke has the first web plate distributed on one side of a center line of the rim 110 and the second web plate distributed on the other side of the center line of the rim 110, so that the spoke can play a distributed supporting role in a tooth width direction of the rim 110. A supporting area of the spoke for the rim 110 is increased to maintain a mesh degree of meshing teeth 111 on the rim 110. The mesh misalignment amounts of the gear 100 are reduced to maintain the mesh degree of the meshing teeth 111 on the rim 110 during meshing of the gear 100, and reduce the mesh misalignment amounts of the gear 100. In this way, the meshing of the gear 100 is smoother, thereby ensuring that the gear 100 can operate based on a theoretical meshing trajectory, reducing transmission error excitation during the meshing of the gear 100, and suppressing occurrence of the beat frequency phenomena of the gear 100.

In the description of this specification, the description of reference terms such as "one embodiment", "some embodiments", "example", "specific example" or "some examples" means that specific features, structures, materials or characteristics described in combination with the embodiment or example are included in at least one embodiment or example of the present disclosure. In this specification, schematic descriptions of the foregoing terms are not necessarily directed at the same embodiment or example. In addition, the described specific features, structures, materials, or characteristics may be combined in a proper manner in any one or more of the embodiments or examples. In addition, a person skilled in the art may integrate and combine different embodiments or examples described in this specification.

Although the embodiments of the present disclosure have been shown and described above, changes, modifications, replacements, or variations to the foregoing embodiments may be made.

## Claims

1. A gear, comprising:
a rim (110), an outer peripheral wall of the rim (110) being provided with meshing teeth (111) arranged along a circumferential direction thereof;
a central portion (120), the central portion (120) being located on a radial inner side of the rim (110); and
a spoke, the spoke being connected between the rim (110) and the central portion (120), the spoke comprising a plurality of first web plates and a plurality of second web plates spaced apart along the circumferential direction of the rim (110), and in a width direction of the gear (100), the first web plates and the second web plates being respectively located on two sides of a center line of the rim (110).

2. The gear according to claim 1, wherein a quantity and weights of the first web plates are equal to those of the second web plates.

3. The gear according to claim 1 or 2, wherein in an axial direction of the gear (100), a spacing between the first web plate and the center line of the rim (110) is a first spacing, a spacing between the second web plate and the center line of the rim (110) is a second spacing, and the first spacing is the same as the second spacing.

4. The gear according to any of claims 1 to 3, wherein in a circumferential direction of the gear (100), the first web plate and the second web plate that are adjacent to each other are connected by a common first side wall (133), the first side wall (133) is transitionally connected to a first bottom wall (131) of a corresponding first web plate through a first transitional surface, and the first side wall is transitionally connected to a second bottom wall (132) of a corresponding second web plate through a second transitional surface.

5. The gear according to claim 4, wherein the first bottom wall (131) of at least one of the first web plates and/or the second bottom wall (132) of at least one of the second web plates is provided with a weight-saving hole (134).

6. The gear according to any of claims 1 to 5, wherein in the axial direction of the gear (100), a width of the rim (110) is L1, a wall thickness of the first web plate and/or the second web plate is L2, and L1 and L2 satisfy the following relationship: L2/L1 ≤ 1/3.

7. The gear according to claim 6, wherein a ratio of a wall thickness of the first web plate and/or the second web plate to a thickness of the rim (110) satisfies L2/L1 ≥ 1/6.

8. The gear according to claim 6 or 7, wherein in the axial direction of the gear (100), the width of the rim (110) is L1, a width of the spoke is L3, and a value of L3/L1 ranges from 80% to 95%.

9. An electric drive assembly, comprising:
a speed reducer (10), the speed reducer (10) being provided with a gear set, the gear set comprising an input gear and an output gear; and
a drive motor, the drive motor being connected to the input gear, and the output gear being the gear according to any of claims 1 to 8.

10. The electric drive assembly according to claim 9, wherein the speed reducer is provided with two sets of gear sets, the drive motor comprises a first drive motor (20) and a second drive motor (30), and the first drive motor (20) and the second drive motor (30) are respectively connected to the input gears of the two sets of gear sets.

11. A vehicle, comprising the gear according to any of claims 1 to 8, or the electric drive assembly according to claim 9 or 10.
